# EUROPÄISCHE PATENTANMELDUNG

(11) **EP 0 674 353 A1**
(43) Veröffentlichungstag der Anmeldung: **27.09.1995**
(21) Anmeldenummer: 95100467.0
(22) Anmeldetag: 14.01.1995
(51) Int. Cl.: H01M 10/42, H01M 2/14

(54) **Elektrochemischer Speicher**

(30) Priorität: 18.03.1994 DE 4409268
(71) Anmelder: DAIMLER-BENZ AKTIENGESELLSCHAFT, D-70567 Stuttgart (DE)
(72) Erfinder: Maly-Schreiber, Martha, Dr., D-89075 Ulm (DE); Huggins, Robert A., Prof., D-89075 Ulm (DE)

(57) **Zusammenfassung**

Die Erfindung betrifft einen elektrochemischer Speicher mit mehreren seriell miteinander verschalteten Einzelzellen, wobei jede der Einzelzellen zwei räumlich getrennte Elektroden aufweist, zwischen denen zumindest ein Elektrolyt und ein den Abstand der Elektroden sicherndes Zwischenteil angeordnet ist. Im Innern des Gehäuses des Speichers ist einer jeden Einzelzelle ein aus einem festen Material gebildetes Schutzelement mit einer nichtlinearen Strom/Spannungs-Kennlinie zugeordnet ist, welches mit der positiven und der negativen Elektrode innerhalb der Einzelzelle einen unmittelbaren Kontakt aufweist und welches diese Elektroden spannungsabhängig elektrisch miteinander verbindet. Der elektrische Widerstandswert des Schutzelementes ist oberhalb einer kritischen Spannung kleiner und unterhalb dieser kritischen Spannung größer als der bei den jeweiligen Spannungen ohne das Schutzelement zwischen den Elektroden vorliegende Widerstandswert. Zum Schutz der Einzelzellen vor einer Überladung ist die kritische Spannung kleiner als die Zersetzungsspannung der zugehörigen Einzelzelle.

## Beschreibung

Die Erfindung betrifft einen elektrochemischen Speicher gemäß dem Oberbegriff des Anspruchs 1, wie er aus der gattungsbildend zugrundegelegten DE 42 29 437 C1 als bekannt hervorgeht.

Die DE 42 29 437 C1 offenbart einen elektrochemischen Speicher der aus mehreren seriell miteinander verschalteten Einzelzellen und einem diese umgebenden Speichergehäuse gebildet ist, aus dem die Pole unterschiedlicher Polarität herausgeführt sind. Durch die Serienschaltung der Einzelzellen ergibt sich die maximale Spannung dieses Speichers durch die Anzahl der Einzelzellen multipliziert mit deren spezifischen Spannung, so daß diese elektrochemischen Speicher eine maximale Spannung von einigen hundert Volt aufweisen können, weshalb sie insbesondere für Traktionsbatterien für Kraftfahrzeuge interessant sind.

Da die Bestandteile der Einzelzellen (Elektroden, Elektrolyt, Gewicht der aktiven Massen, Verteilung usw.) nicht völlig identisch hergestellt werden können, erreichen die Einzelzellen während des Aufladens ihren maximalen Ladungszustand zu unterschiedlichen Zeitpunkten. Wenn diese bereits vollständig geladenen Einzelzellen weiter einer Ladespannung ausgesetzt werden, die die Zersetzungsspannung der einzelnen Komponenten der Einzelzellen übersteigt, kann es zu Beschädigung der Einzelzellen kommen, die bis hin zu Zerstörungen reichen können. Bei elektrochemischen Speichern mit einer bipolaren Schichtbauweise, also mit einem prinzipiellen Aufbau entsprechend Plus-Elektrode, bipolare Platte, Minus-Elektrode, Elektrolyt, Plus-Elektrode usw., ist diese Gefahr erheblich, da bei diesen der Stromfluß quer durch die schichtweise aneinandergelegten dünnen Funktionsplatten oder -folien erfolgt, wobei die Elektroden über keine Stromableiterfahnen verfügen, zwischen die ein Schutzelement zwischengeschaltet werden kann. Des weiteren wäre einen entsprechende Kontaktierung zumindest sehr aufwendig, da die Dicke der einzelnen Elemente einer Einzelzelle geringer als 1 mm ist. In manchen Fällen sind die Elektrolyten und/oder die Elektroden sogar als dünne Folie ausgebildet.

Aus der DE 28 19 584 C2 ist eine Schutzschaltung für mehrere in Serie oder Gruppen von parallel geschalteten elektrochemischen Speichern bekannt, bei der jedem in Serie geschalteten und jeder Gruppe von parallel geschalteten elektrochemischen Speicherzellen ein Schutzelement zugeordnet wird, das von außen angeordnet und elektrisch parallel dazu geschaltet ist. Das Schutzelement dient hierbei dazu, daß bei einer etwaigen an den Polen der Speicher anliegenden und etwa der maximalen Ladespannungen entsprechenden Überspannung über das Schutzelement abfließen kann, so daß die Speicherzelle nicht zerstört wird.

Die Speicherzellen selbst weisen in ihrem Innern mehrere parallel zueinander geschaltete Einzelzellen auf, die zumindest aus voneinander beabstandeten Elektroden und zwischen den Elektroden angeordnetem Elektrolyt bestehen. Da diese Einzelzellen ebenfalls nicht völlig identisch hergestellt werden können, erreichen sie auch während des Aufladens ihren maximalen Ladungszustand zu unterschiedlichen Zeitpunkten. Damit hier keine Zerstörung einer Einzelzelle auftreten kann, richtet sich insbesondere bei elektrochemischen Speichern mit Gel-Elektrolyten und Fest-Elektrolyten deren maximale Ladespannung nach dem schwächsten Glied. Daher müssen alle Bestandteile dieser Einzelzellen hinreichend dimensioniert werden, daß die gewünschte Ladespannung gesichert angelegt werden kann. Hiermit ist allerdings ein Massenzuwachs verbunden, welcher bedingt, daß die reale Masse des elektrochemischen Speichers über der rechnerisch benötigten Masse liegt.

Die Aufgabe der Erfindung ist es, den gattungsgemäß zugrundegelegten elektrochemischen Speicher dahingehend weiterzuentwickeln, daß insbesondere bei elektrochemischen Speichern in Schichtbauweise in einfacher Weise zumindest eine überladungsbedingte Zerstörung zuverlässig vermieden werden kann, wobei die Gesamtmasse des Speicher möglichst gering zu halten ist.

Die Aufgabe wird bei einem elektrochemischen Speicher durch die kennzeichnenden Merkmale des Anspruchs 1 gelöst. Durch die direkte Anbringung des spannungsabhängig elektrisch leitenden Schutzelementes an den beiden Elektroden einer jeden Einzelzelle wird der elektrochemische Speicher bereits bei Zusammenbau in einfacher Weise mit dem Schutzmechanismus versehen, wobei bei allenfalls geringem prozentualen Gewichtszuwachs des elektrochemischen Speichers kein externer überladeschutz mehr notwendig ist.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt
- Fig. 1: einen Schnitt durch einen elektrochemischen Speicher in bipolarer Schichtbauweise,
- Fig. 2: einen Schnitt durch mehrere Einzelzellen mit einem im Elektrolyt integrierten Schutzelement,
- Fig. 3: eine Detailvergrößerung des Elektrolyten nach Figur 2 mit integriertem, gekörntem Schutzelement,
- Fig. 4: ein als Rahmen ausgebildetes und zwischen zwei Elektroden anordenbares Schutzelement,
- Fig. 5: ein als Gitter ausgebildetes Schutzelement und
- Fig. 6: ein als Trog ausgebildetes Schutzelement mit innenseitig angeordneten Einzelzellen.

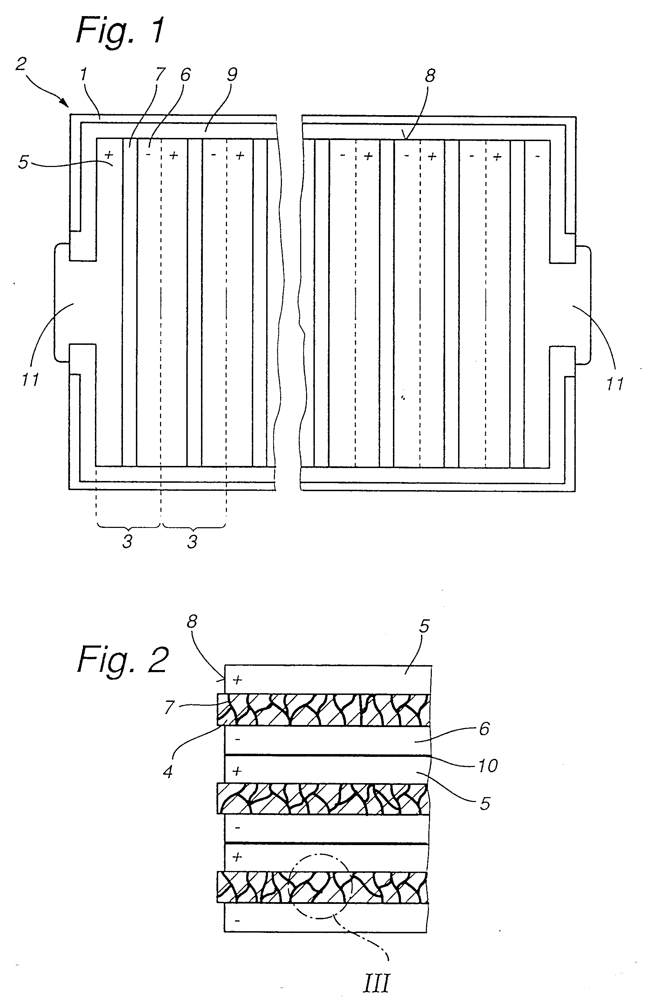

In Figur 1 ist ein Schnitt durch einen elektrochemischen Speicher 2 in bipolarer Schichtbauweise dargestellt. Innerhalb des Gehäuses 1 des Speichers 2 sind aufeinanderfolgend mehrere in Reihe geschaltete Einzelzellen 3 aneinander angeordnet, die innerhalb eines isolierenden Isoliertroges 9 angeordnet sind. Jede Einzelzelle 3 weist hierbei eine dünne positive 5 und eine dünne negative Elektrode 6 mit dazwischen angeordnetem Elektrolyt 7 auf. Im vorliegenden Fall ist der Elektrolyt 7 sinnvollerweise ein Fest-Elektrolyt, da er dadurch als Folie hergestellt oder auch auf eine Folie aufgetragen werden kann und dadurch nur einen geringen Platz- und Massenbedarf aufweist. Prinzipiell könnte der Elektrolyt 7 allerdings auch ein Gel, eine Flüssigkeit oder ein Trocken-Elektrolyt sein. Die Reihenschaltung benachbarter Einzelzellen 3 wird günstigerweise mittels den Elektroden 5, 6 vorgenommen, die mittig eine vollflächig angeordnete bipolare Platte 10 aufweisen können und die zum einen bspw. die positive Elektrode 5 der ersten Einzelzelle 3 und gleichzeitig die negative Elektrode 6 der zweiten Einzelzelle 3 verbindet. Zur Stromabnahme sind an den äußeren Elektroden 5, 6 der beiden endseitig angeordneten Einzelzellen 3 Stromableiter 11 angeordnet, die mit den beiden Polen des Speichers 1 verbunden sind oder den Stromableiter 11 auch selbst ausbilden können. Derartige elektrochemische Speicher 2 weisen, wenn sie insbesondere als Traktionsbatterien für Kraftfahrzeuge eingesetzt werden, ein Spannung zwischen 100 V und 500 V, zumeist von etwa 300 V auf.

Zur Sicherung der Einzelzellen 3 vor einer Überladung und einer dadurch erfolgenden Zerstörung sind im Innern des Gehäuses 1 des elektrochemischen Speichers 2 im Raum des Elektrolyten 7 zwischen den Elektroden 5, 6 einer jeden Einzelzelle 3 aus einem eine nichtlineare Strom/Spannungs-Kennlinie aufweisenden Material gefertigte Schutzelemente 4, 14, 24 angeordnet, die an den Elektroden 5, 6 der Einzelzelle 3 anliegen und diese spannungsabhängig elektrisch miteinander verbinden. Das Schutzelement 4, 14, 24 weist hierbei einen spannungsabhängigen Widerstand auf, so daß bei Anliegen der Zersetzungsspannung der Einzelzelle 3 an ihren Elektroden 5, 6 das Schutzelement 4, 14, 24 quasi einen Kurzschluß bildet und der Strom durch das Schutzelement 4, 14, 24 abfließen kann. Ist die Spannung zwischen den beiden Elektroden 5,6 einer Einzelzelle 3 um einen bestimmten Betrag geringer als die Zersetzungsspannung, so weist das Schutzelement 4, 14, 24 einen Widerstandswert auf, der um ein Vielfaches größer ist als derjenige Widerstandswert, den die Einzelzelle 3 bei dieser Spannung ohne das Schutzelement 4, 14, 24 aufweisen würde. Dadurch ist ein Stromfluß durch das Schutzelement 4, 14, 24 unterhalb der Zersetzungsspannung weitgehend unterbunden, wodurch der Speicher 2 geladen werden kann.

Als praktisch hat es sich hierbei erwiesen für das aus festem Material gebildete Schutzelement 4, 14, 24 ein derartiges Material und/oder eine derartige Schichtstärke des Materials auszuwählen, so daß der elektrische Widerstandswert des Schutzelementes 4, 14, 24 weit unterhalb der kritischen Spannung größer als das Dreifache des bei diesen Spannungen zwischen den Elektroden 5, 6 ohne Schutzelement vorliegenden Widerstandswerts ist und daß der elektrische Widerstandswert des Schutzelementes 4, 14, 24 bei der kritischen Spannung kleiner als ein Zehntel des zwischen den Elektroden 5, 6 ohne Schutzelement 4, 14, 24 vorliegenden Widerstandswerts ist. Sinnvolle Materialien sind hierbei Varistor-Materialien oder Halbleiter-Materialien, insbesondere einige amorphe Halbleiter.

Im folgenden wird auf die gegenständliche Ausbildung und die Anordnung des Schutzelementes 4, 14, 24, 34 innerhalb des Speichers 2 eingegangen, wie sie in den Figuren 2 bis 6 dargestellt sind.

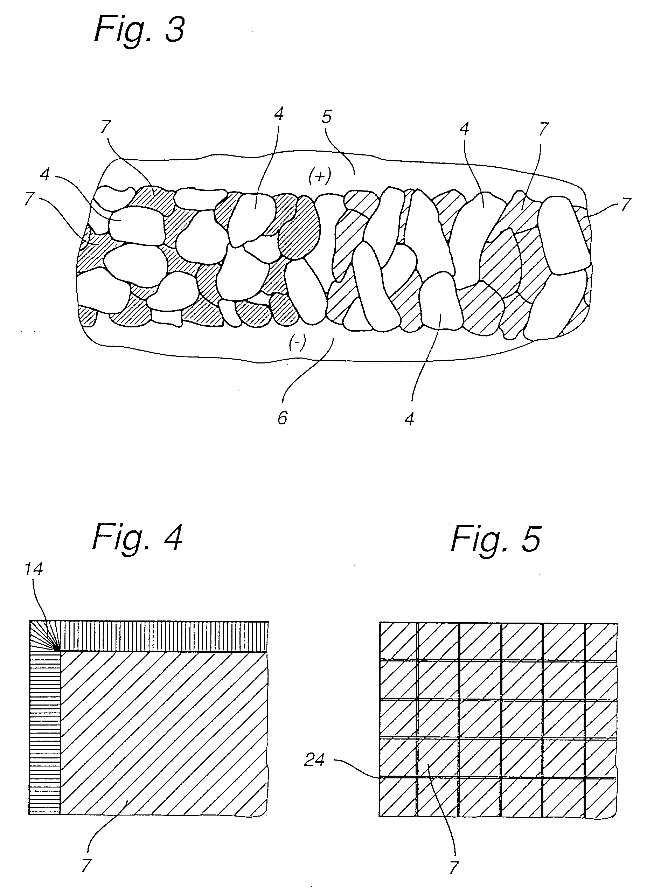

In Figur 2 ist ein Schnitt durch einen eine bipolare Schichtstruktur-Bauweise aufweisenden elektrochemischen Speicher 2 mit mehrere Einzelzellen 3 dargestellt, bei dem das Schutzelement 4 in einem als Festkörper ausgebildeten Elektrolyten 7 integriert ist. Wie in der Figur 3 dargestellt ist hierzu das Material des Schutzelementes 4 zu kleinen Körnern gemahlen, deren mittlerer Durchmesser günstigerweise im µm-Bereich angeordnet ist. Das Material des Schutzelementes 4 wird bei der Herstellung des Elektrolyten 7 in gekörnter Form beigegeben, wobei es sich innerhalb des Volumens des Elektrolyten 7 statistisch verteilt. Gleichzeitig berühren sich die Körner des Materials des Schutzelementes 4 an ihren Korngrenzen, wodurch über die Dicke des gesamten Elektrolyten 7 betrachtet eine spannungsabhängige Leitung von einer Flachseite des Elektrolyten 7 zu seiner anderen Flachseite ausgebildet ist. Da an die Flachseiten des Elektrolyten 7 innerhalb einer Einzelzelle 3 die Elektroden 5, 6 angelegt sind, verbindet diese aus den Körnern des Materials des Schutzelementes 4 gebildete Leitung die beiden Elektroden 5, 6 der Einzelzelle 3 spannungsabhängig miteinander, wobei das aus Körnern gebildete Schutzelement 4 gleichzeitig ein Stützgerüst bildet.

Weist der elektrochemische Speicher 2 einen gasförmigen, gelförmigen oder flüssigen Elektrolyten 7 auf, können diese Körner des Materials des Schutzelementes 4, das in dem Elektrolyten 7 unlösbar sein muß, beispielsweise an ihren Korngrenzen insbesondere durch Sintern verbunden sein und dadurch einen porösen Separator ausbilden. Durch diesen Separator kann dann der Elektrolyt 7 je nach Porosität des Separators, nahezu ungehindert eine Elektrode 5 mit der anderen Elektrode 6 einer Einzelzelle 3 verbinden.

Des weiteren beabstandet ein derartiger Separator die beiden Elektroden 5, 6 einer Einzelzelle 3 zuverlässig voneinander und bildet zugleich das Schutzelement 4, 14, 24, indem er bei Anliegen der Zersetzungsspannung an den betreffenden Elektroden 5, 6 einer Einzelzelle 3 diese beiden Elektroden 5, 6 miteinander nahezu kurzschließt.

Eine weitere Möglichkeit der Ausbildung des Schutzelementes 14 ist in Figur 4 dargestellt, wobei das Schutzelement 14 als rahmenartiges Stützgerüst ausgebildet ist. Die Außenmaße des aus einem einen spannungsabhängigen elektrischen Widerstand aufweisenden Material gefertigten und als Rahmen ausgebildeten Schutzelementes 14 entsprechen etwa den Außenmaßen der zugeordneten Elektroden 5, 6.

Bei einem zusammengebauten Speicher 2 wird dann dieses rahmenartige Schutzelement 14 zwischen die Elektroden 5, 6 einer jeden Einzelzelle 3 eingelegt, wodurch es an den Rändern der Elektroden 5, 6 anliegt und diese bei der kritischen Spannung elektrisch leitend miteinander verbindet. Unterhalb dieser kritischen Spannung ist der Widerstand des rahmenartigen Schutzelementes 24 so hoch, daß er die betreffenden Elektroden 5, 6 gegeneinander isoliert, so daß der Ladungstransport über den innerhalb der Stege des rahmenartigen Schutzelementes 14 angeordneten Elektrolyten 7 erfolgt.

Durch die rahmenartige Ausbildung des Schutzelementes 14, kann der Elektrolyt 7 in derartigen Speichern 2 u.a. auch flüssig sein, ohne daß weitere an sich bekannte und aufwendige konstruktive Maßnahmen, wie einzelne isolierende und jeweils eine Einzelzelle 3 aufnehmende Taschen ergriffen werden müssen, da das Schutzelement 14 in Verbindung mit den beiden Elektroden 5, 6 den Elektrolyten 7 vollständig dichtend umschließen kann.

Ein in einfacher Weise für flache Einzelzellen 3 ausführbares Schutzelement 24 ist in Figur 5 dargestellt. In diesem Ausführungsbeispiel ist das Schutzelement 24 als ein Gitter oder entsprechend als ein Netz ausgebildet, das zwischen zwei Elektroden 5, 6 einer jeden Einzelzelle 3 des elektrochemischen Speichers 2 eingelegt ist und mit den Elektroden 5, 6 einer Einzelzelle 3 einen direkten Kontakt aufweist. Der Elektrolyt 7 der jeweiligen Einzelzelle 3, der im vorliegenden Fall sinnvollerweise ein Fest- oder ein Gel-Elektrolyt ist, ist hierbei in den Freiräumen des gitterähnlichen bzw. entsprechend in den Waben des netzartigen Schutzelementes 24 angeordnet.

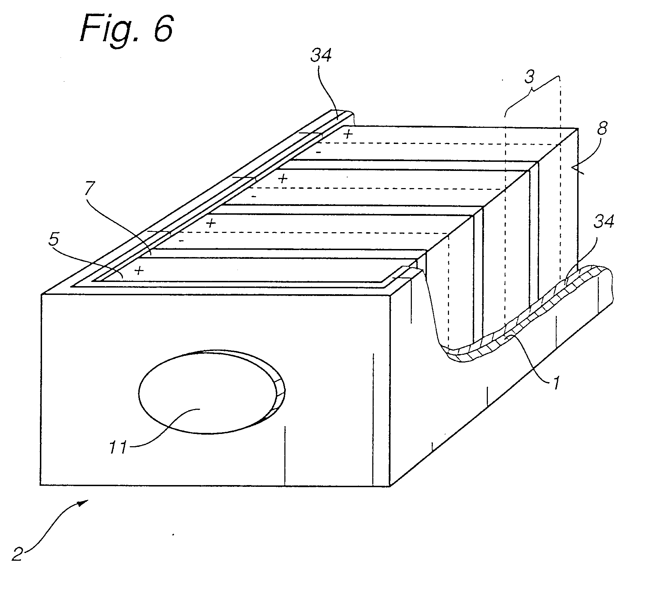

In Figur 6 ist ein als Trog ausgebildetes Schutzelement 34 dargestellt, wobei die Einzelzellen 3 und deren funktionelle Elemente wie Elektroden 5, 6, Elektrolyt 7, ggf. Separator usw. in dem trogähnlichen Schutzelement 34 aufgenommen sind.

Damit das Schutzelement 34 seine Funktion erfüllt, liegen die Schmalseiten der Elektroden 5, 6 der Einzelzellen 3 an den Wänden des trogähnlichen Schutzelementes 34 kontaktierend an.

Prinzipiell kann daher das Schutzelement 34 auch als ein alle Einzelzellen 3 des elektrochemischen Speichers 2 umfassender Rahmen oder auch nur als eine einseitig eingelegte Platte oder als einseitig an den Schmalseiten der Elektroden 5, 6 kontaktierend anliegender Steg ausgebildet sein.

Die Ausbildung als Trog ist daher allerdings von Vorteil, daß wenn auf einen normalerweise verwandten Gel- oder Fest-Elektrolyten verzichtet wird, die Wände des als Trog ausgebildeten Schutzelementes 34 derart dicht an den Schmalseiten der Elektroden 7 anliegen können, daß sie im diesem Falle den zwischen den Elektroden 5, 6 einer Einzelzelle 3 angeordneten flüssigen Elektrolyten 7 am Austritt aus der Einzelzelle 3 und dadurch an einem gegenseitigen Kurzschluß der Einzelzellen 3 untereinander hindern.

Da das Material des Schutzelementes 34 unterhalb der kritischen Spannung quasi-isolierend ist, sind auch die Einzelzellen 3 unterhalb dieser Spannung weiterhin seriell geschaltet und nicht durch das Schutzelement 34 kurzgeschlossen.

## Patentansprüche

1. Elektrochemischer Speicher mit mehreren seriell miteinander verschalteten Einzelzellen, wobei jede der Einzelzellen zwei räumlich getrennte Elektroden aufweist, zwischen denen zumindest ein Elektrolyt und ein den Abstand der Elektroden sicherndes Zwischenteil angeordnet ist,
**dadurch gekennzeichnet,**
daß im Innern des Gehäuses (1) des elektrochemischen Speichers (2) einer jeden Einzelzelle (3) ein aus einem festen Material gebildetes Schutzelement (4, 14, 24, 34) mit einer nichtlinearen Strom/Spannungs-Kennlinie zugeordnet ist, welches mit der positiven (5) und der negativen Elektrode (6) innerhalb der Einzelzelle (3) einen unmittelbaren Kontakt aufweist und welches diese Elektroden (5, 6) spannungsabhängig elektrisch miteinander verbindet, wobei der elektrische Widerstandswert des Schutzelementes (4, 14, 24, 34) oberhalb einer kritischen Spannung kleiner und unterhalb dieser kritischen Spannung größer als der bei den jeweiligen Spannungen ohne das Schutzelement (4, 14, 24, 34) zwischen den Elektroden (5, 6) vorliegende Widerstandswert ist, wobei die kritische Spannung kleiner als die Zersetzungsspannung der zugehörigen Einzelzelle (3) ist.

2. Elektrochemischer Speicher nach Anspruch 1,
**dadurch gekennzeichnet,**
daß der elektrische Widerstandswert des Schutzelementes (4, 14, 24, 34) weit unterhalb der kritischen Spannung größer als das Dreifache des bei diesen Spannungen zwischen den Elektroden (5, 6) ohne Schutzelement (4, 14, 24, 34) vorliegenden Widerstandswerts ist und daß der elektrische Widerstandswert des Schutzelementes (4, 14, 24, 34) bei der kritischen Spannung kleiner als ein Zehntel des zwischen den Elektroden (5, 6) ohne Schutzelement (4, 14, 24, 34) vorliegenden Widerstandswerts ist.

3. Elektrochemischer Speicher nach Anspruch 1,
**dadurch gekennzeichnet**,
daß das Schutzelement (4, 14, 24, 34) aus einem Varistor-Material oder einem Halbleiter-Material, insbesondere aus einem amorphen Halbleiter-Material gebildet ist.

4. Elektrochemischer Speicher nach Anspruch 1,
**dadurch gekennzeichnet,**
daß das Schutzelement (4, 14, 24) in ein die Distanz der Elektroden (5, 6) sicherndes Zwischenteil, insbesondere in einen Separator oder einen Elektrolyten (7) integriert ist.

5. Elektrochemischer Speicher nach Anspruch 1,
**dadurch gekennzeichnet,**
daß das Schutzelement (4 ,14, 24) als ein formstabiles und Öffnungen für den Elektrolyt (7) aufweisendes Gerüst, insbesondere als ein Gitter oder als ein Netz, ausgebildet ist.

6. Elektrochemischer Speicher nach Anspruch 1,
**dadurch gekennzeichnet,**
daß das Schutzelement (4) porös ist, und daß in den Poren des Schutzelementes (4) der Elektrolyt (7) angeordnet ist.

7. Elektrochemischer Speicher nach Anspruch 1,
**dadurch gekennzeichnet,**
daß das Schutzelement (34) einen Rahmen ausbildet, der die Elektroden (5, 6) der Einzelzellen (3) außenseitig umfaßt und an dem die Schmalseiten (8) der Elektroden (5, 6) und der Elektrolyt (7) der Einzelzellen (3) kontaktierend anliegen.

8. Elektrochemischer Speicher nach Anspruch 1,
**dadurch gekennzeichnet,**
daß das Schutzelement (34) einen Trog ausbildet, in dem die Elektroden (5, 6) und der Elektrolyt (7) des Speichers (2) aufgenommen ist und an dessen Wandungen die Schmalseiten (8) der Elektroden (5, 6) der Einzelzellen (3) kontaktierend anliegen.

9. Elektrochemischer Speicher nach Anspruch 1,
**dadurch gekennzeichnet,**
daß der Elektrolyt (7) ein folienartig flexibel ausgebildeter Fest-Elektrolyt ist.

10. Elektrochemischer Speicher nach Anspruch 1,
**dadurch gekennzeichnet,**
daß das Schutzelement (34) als Streifen ausgebildet ist, der die Elektroden (5, 6) der Einzelzellen (3) außenseitig umfaßt und an dem die Schmalseiten (8) der Elektroden (5, 6) und der Elektrolyt (7) kontaktierend anliegen.
